# DEMANDE DE BREVET EUROPEEN

(11) **EP 0 693 359 A1**
(43) Date de publication de la demande: **24.01.1996**
(21) Numéro de dépôt: 95401631.7
(22) Date de dépôt: 06.07.1995
(51) Int. Cl.: B29C 53/08

(54) **Procédé et dispositif pour thermoformer une tubulure en matière plastique**

(30) Priorité: 18.07.1994 FR 9408849
(71) Demandeur: NOBEL PLASTIQUES, F-92000 Nanterre (FR)
(72) Inventeur: Adrien, Jean-Pierre, F-51300 Vitry le Francois (FR)
(74) Mandataire: Robert, Jean-Pierre

(57) **Abrégé**

Procédé et dispositif pour placer dans une géométrie particulière par thermoformage au moins un tronçon (23) de tube, selon lequel on place au moins un tronçon de tube rectiligne dans une pluralité de guides (16,17), comportant chacun au moins un logement (18, 19), les logements étant préalablement placés en alignement, la position de chaque guide étant connue dans un repère (X, Y, Z) déterminé, on fait circuler un fluide chaud à l'intérieur du tube (23), on déplace chacun des guides (16, 17) parallèlement à lui-même dans le repère (X, Y, Z) d'une valeur connue, on refroidit le tube ainsi maintenu déformé et en ce qu'on dégage le tube (23) mis en géométrie des guides (16, 17).

## Description

Les tubulures en matière plastique sont de plus en plus utilisées notamment dans le domaine automobile pour les canalisations de carburant ou de liquide technique, en substitution des canalisations métalliques.

Le formage de ce type de canalisations est nécessaire pour simplifier la pose au moment du montage du véhicule. Il est réalisé en général à l'aide d'un mannequin. Celui-ci sert de gabarit et possède des organes pour maintenir en forme le tube déformé élastiquement le temps de son traitement thermique grâce auquel cette déformation élastique est rendue plastique et permanente. Plus précisément chaque tronçon de tube est préchauffé avant sa mise en place (manuelle) sur le mannequin pour diminuer les efforts à développer lors de cette mise en forme. Ensuite, le tube est parcouru par un fluide à température suffisamment élevée pour provoquer un amollissement de la matière plastique et une élimination des contraintes élastiques. Il est ensuite soumis à un refroidissement pour le figer dans cette forme. L'opération est en général longue puisque manuelle et demande de disposer d'un outillage spécifique pour chaque forme de tube. Une production de masse exige en plus de confectionner de nombreux mannequins, même pour un type donné de véhicules, car il n'est pas possible de mettre en place sur un mannequin plus de deux, trois à quatre tronçons de tube en même temps. Enfin, le temps opératoire est très long.

La présente invention entend proposer un nouveau procédé pour réaliser ce genre de produit et un dispositif pour le mettre en oeuvre qui permettent de diminuer sensiblement le temps de cycle de production et la main-d'oeuvre employée.

A cet effet, l'invention a donc pour premier objet un procédé pour placer dans une géométrie particulière par thermoformage au moins un tronçon de tube selon lequel on place le tronçon de tube dans une pluralité de guides comportant chacun au moins un logement pour accueillir le tronçon de tube, les logements étant préalablement placés en alignement, la position de chaque guide étant connue dans un repère déterminé, on fait circuler un fluide chaud à l'intérieur du tube, on déplace chacun des guides parallèlement à lui-même dans le repère d'une valeur connue, on refroidit le tube ainsi maintenu déformé et on dégage le tube mis en géométrie des guides.

Ce procédé permet de réaliser de manière simple la mise en forme d'un tube rectiligne installé dans une série de logements ménagés dans des guides, ces guides étant dans une position d'origine identifiée dans un repère déterminé, par exemple par ses coordonnées en X, Y, Z, en déplaçant, après avoir échauffé le tube, chacun des guides sur un segment déterminé entre la position d'origine et la position dans le repère du coude que le guide est sensé former sur le tube, et en refroidissant ce tube pour figer la déformation qui lui a été imprimée par les déplacements des guides.

L'extraction du tube formé s'opère de manière simple si les logements sont des orifices et les guides sont ouvrants, c'est-à-dire en deux parties en contact l'une sur l'autre le long d'un plan de joint qui contient l'axe d'orifice, si le plan de joint de chaque guide forme un plan unique lorsque les orifices sont alignés, c'est-à-dire lorsque les guides sont dans leur position d'origine et si chaque guide est déplacé parallèlement à lui-même de sorte qu'en position finale les plans de joints restent tous parallèles entre eux. Ainsi, lorsqu'on ouvre les guides, le tronçon de tube peut quitter, par exemple par gravité, les orifices dans lesquels il était prisonnier.

Pour que les coudes du tube soient correctement formés quelle que soit la direction de déplacement de chaque guide, les orifices seront formés en diabolo c'est-à-dire auront une surface intérieure torique. Le plus petit diamètre de ces orifices sera fonction du diamètre du tube à former, tandis que le rayon de courbure de la surface torique sera choisi en fonction de l'angle que formeront entre elles deux portions de tube rectilignes issues d'un coude.

Alternativement, il est avantageux d'employer des guides comportant chacun au moins une sphère mobile en rotation autour de son centre dans un réceptacle du guide, et présentant une fente s'étendant suivant l'équateur de la sphère, le fond de la fente traversant la sphère suivant un trajet courbe. Chaque sphère reçoit un tronçon de tube qui vient en appui contre une portion du fond de la fente. Le déplacement des guides et la déformation du tube provoquent la rotation de la sphère de sorte que le tube se déforme en prenant appui au fond de la fente et en épousant la forme de ce fond. Ici encore, le rayon de courbure du fond de la fente sera choisi en fonction de l'angle formé par deux portions de tube rectilignes issues d'un coude.

De manière préférée, on procèdera successivement au déplacement de chacun des guides, le premier guide à être déplacé étant celui le plus proche d'un dispositif de maintien fixe d'une extrémité du tube. En effet, chaque déplacement de guide entraînant un glissement du tube par rapport à ce guide et aux guides qui le suivent, en procédant de cette manière on évite la déformation du tube qui coulisserait entre deux guides non alignés.

L'invention a également pour objet un dispositif pour mettre en oeuvre le procédé susdit qui comporte une pluralité de supports motorisés, déplaçables selon les trois directions d'un repère spatial à partir d'une position d'origine, chaque support étant équipé d'un guide comportant une pluralité d'orifices en forme de diabolo, dont les axes sont parallèles et coplanaires, le plan des axes formant le plan de joint de deux parties de chaque guide séparables l'une de l'autre, la position d'origine étant définie par un plan contenant l'ensemble des axes des orifices et dans lequel les orifices relatifs à un même tube sont alignés, un organe de commande programmable du déplacement séquentiel de chacun des supports et un organe de commande de l'ouverture et de la fermeture de chacun des guides.

L'invention a également pour objet un dispositif pour mettre en oeuvre le procédé susdit qui comporte une pluralité de supports motorisés, déplaçables selon les trois directions d'un repère spatial à partir d'une position d'origine, chaque support étant équipé d'un guide comportant au moins une sphère disposée dans un réceptacle du guide en étant mobile en rotation autour de son centre par rapport au réceptacle, la sphère présentant une fente s'étendant suivant l'équateur de la sphère, le fond de la fente s'étendant suivant un trajet courbe, la position d'origine correspondant à une position des supports dans laquelle les sphères relatives à un même tube sont alignées, le dispositif comportant en outre un dispositif de commande programmable du déplacement séquentiel de chacun des supports.

D'autres caractéristiques et avantages de l'invention ressortiront de la description d'un exemple de réalisation et d'une variante donnée ci-après à titre purement indicatif.

Il sera fait référence aux dessins annexés parmi lesquels :
- la figure 1 est une vue schématique d'un dispositif pour mettre en oeuvre le procédé de l'invention;
- la figure 2 est un schéma d'un guide mis en oeuvre dans l'invention;
- la figure 3 est un schéma d'une variante de réalisation du guide, montrant le tube avant thermoformage; et
- la figure 4 est un schéma du guide de la figure 3 montrant le tube après thermoformage.

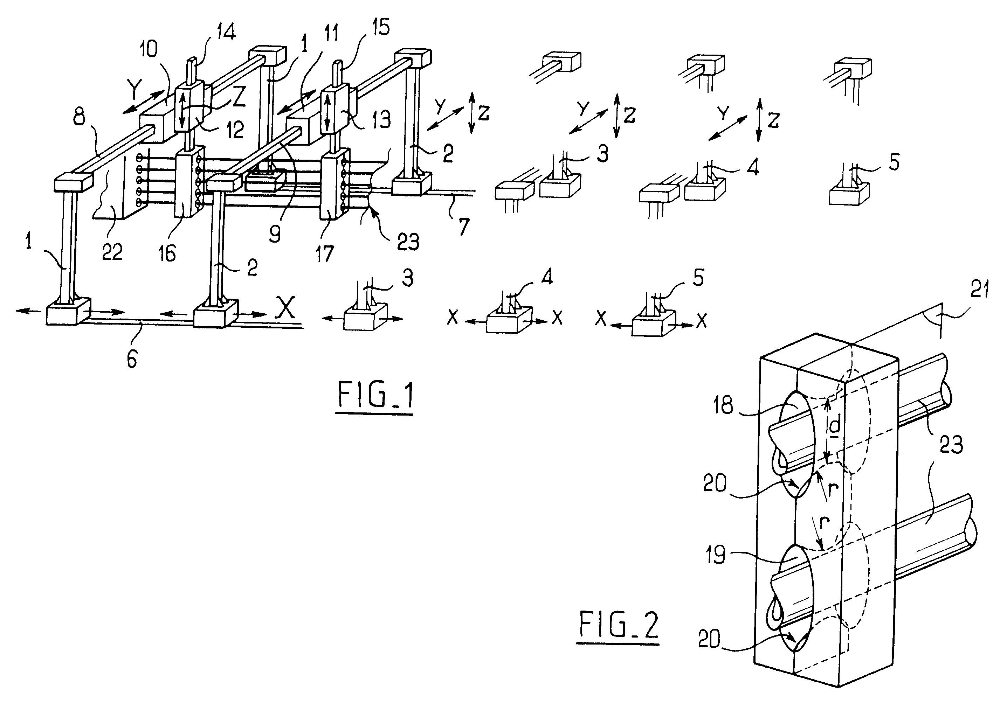

A la figure 1, le dispositif représenté comporte une pluralité de portiques 1, 2, 3, 4, 5 déplaçables le long d'un premier chemin de guidage 6, 7 définissant par exemple la direction X d'un repère orthogonal. Chaque portique comporte deux montants reliés par une traverse 8, 9 dont la direction est perpendiculaire à la direction X et définit la direction Y de ce repère orthogonal. Sur cette traverse 8, 9 un chariot 10, 11 est susceptible de coulisser dans les deux sens de la direction Y. Le chariot 10, 11 porte enfin un guide 12, 13 définissant une direction de déplacement pour un support 14, 15. Cette direction de déplacement correspond à la troisième direction Z du repère orthogonal.

Chaque support 14, 15 est porteur d'un guide 16, 17 dont la figure 2 constitue une vue agrandie.

Le déplacement de chaque portique dans les deux sens de la direction X, le déplacement de chaque chariot le long de chaque traverse, et le déplacement de chaque support par rapport au chariot sont assurés par des moyens d'entraînement non représentés qui comportent, à l'instar des chaînes robotisées de montage connues dans de nombreuses branches d'industrie, des moyens de commande reliés à une unité centrale programmable et des capteurs permettant de délivrer à cette unité de commande programmable toute information utile quant à la position de chacun des guides dans leur repère X, Y, Z. On comprend que le déplacement de chacun des guides dans ce repère conserve le guide parallèle à lui-même, ce qui est avantageux comme expliqué ci-après.

Chacun des guides 16, 17 est représenté à la figure 2 comme un bloc parallélépipèdique dans lequel est ménagée une pluralité de logements qui sont ici des orifices tels que 18, 19. Ces orifices sont tels que leurs axes sont coplanaires et parallèles entre eux, le plan de ces axes étant, dans le cas des figures, parallèle à la direction Z du repère. La surface 20 qui délimite chaque orifice est une surface torique qui définit un diamètre d pour l'orifice et qui possède une courbure de rayon r. Le diamètre d est choisi en fonction du diamètre du tube à traiter tandis que le rayon de courbure r est déterminé par le rayon de courbure du coude à la confection duquel le guide est destiné. On notera en outre que chaque guide 16, 17 est en deux parties symétriques par rapport au plan 21 contenant l'axe des orifices. Ces deux parties forment ainsi un guide ouvrant et sont séparables l'une de l'autre soit par écartement, soit par basculement de l'une par rapport à l'autre grâce à des moyens d'articulation qui ne sont pas représentés aux figures.

Enfin, en se référant à nouveau à la figure 1, on constate que chacun des guides peut porter plus de deux orifices tels que 18 et 19 et que le dispositif de l'invention comporte un organe 22 permettant d'assujettir dans une position fixe dans le repère X, Y, Z, une extrémité des divers tronçons de tube 23 qui sont logés dans les guides 16, 17. Ce dispositif 22 comportera de manière avantageuse des orifices en forme de diabolo ou au moins évasés en regard du guide 16 qui lui succède et des moyens internes, en amont de cet orifice évasé, de fixation des tronçons de tube associés à des moyens d'alimentation de chacun de ces tronçons avec un fluide soit chauffant soit réfrigérant. Il peut être intéressant également que la position de ce dispositif de fixation 22 soit réglable dans le repère pour prendre en compte le caractère limité des amplitudes de déplacement de chacun des guides dans ce repère, ce par construction. En effet, le tube rectiligne à mettre en géométrie sera de préférence placé dans une zone médiane du repère autour de laquelle seront le mieux possible balancés les coudes à former.

Pour mettre en oeuvre le procédé de l'invention, on place les guides 16, 17 dans une position telle que leurs orifices sont alignés et sont alignés avec l'orifice de sortie du dispositif de fixation 22. Les tronçons de tube à mettre en géométrie sont alors enfilés dans chacun des guides et dans le dispositif de fixation 22.

Ce n'est pas sortir de l'invention que d'imaginer une alimentation automatique de ces tronçons de tube qui seraient issus des orifices du dispositif de fixation 22 grâce à un dispositif d'entraînement approprié, pour pénétrer dans les orifices des guides 16, 17, ceux-ci ayant été, pour les besoins de cette introduction, rapprochés les uns des autres selon la direction X du repère. On peut également prévoir une alimentation par nappe des tronçons de tube, cette alimentation se faisant latéralement après que les guides ont été ouverts, par exemple par basculement d'une de leur partie constitutive, l'extrémité de la nappe étant alors prise en charge par le dispositif 22 au moment où les guides se referment sur celle-ci.

Ainsi, après la mise en place de la pluralité de tubes 23 à mettre en géométrie, on fait circuler dans chacun de ces tubes 23 un fluide chaud par exemple de la vapeur, de l'huile ou un éthylène glycol porté à une température voisine de 150, 170°C pendant un temps de l'ordre de 10 à 20 secondes, afin de réchauffer la paroi de ces tubes. On commande ensuite le déplacement du guide 16 qui est le plus voisin du dispositif de fixation 22, celui-ci entraînant la formation d'un coude à la sortie du dispositif 22 et d'un coude au droit de ses orifices 18, 19..., les tronçons de tube situés en aval de ce guide 16 coulissant à l'intérieur des guides 17 et suivants. Un début de coude se forme également au niveau du guide 17 dont on commande le déplacement lorsque le guide 16 a atteint sa position définitive. Un nouveau glissement des tubes se produit à l'intérieur des guides 17 et suivants et lorsque ce dernier a atteint sa position finale, on continue de déplacer chacun des guides qui lui succèdent.

On obtient ainsi pour chacun des tubes de la nappe 23 une mise en géométrie correspondante à celle programmée. Pour fixer cette géométrie, on fait circuler à l'intérieur de chacun des tubes de la nappe 23 un fluide froid ou à température ambiante. On notera que le fluide chaud comme le fluide froid s'écoule dans les tronçons de tube en traitement sans pression ou à très faible pression. C'est ainsi que le fluide peut s'échapper librement des tronçons de tube et être recueilli dans une bâche du dispositif prévu à cet effet. Lorsque les tronçons de tube sont suffisamment refroidis, on commande l'ouverture des guides et l'ensemble des tubes peut tomber sur un dispositif de manutention prévu à cet effet par exemple entre les chemins de guidage 6 et 7.

On dispose ainsi d'un moyen de production très souple qui permet de modifier très rapidement les caractéristiques géométriques des produits fabriqués sans qu'il soit nécessaire de mettre en oeuvre un outillage spécifique. Il en résulte un faible investissement pour chaque nouvelle forme ce qui diminue d'autant le prix de vente du produit. En outre, le travail des tronçons de tube par nappe permet d'augmenter très sensiblement la cadence de production. Enfin, ce dispositif commandé par une unité centrale programmable permet de diminuer considérablement la main-d'oeuvre nécessaire à ce type de production.

Alors que cet exemple de réalisation de l'invention met en oeuvre des guides travaillant sur des nappes disposées sensiblement verticalement, l'invention s'étend également à des dispositifs permettant de traiter des nappes horizontales, voire des faisceaux de tube dans la mesure où il est possible de régler simplement l'ouverture des guides pour le dégagement des tubes qui y sont emprisonnés. De même, les portiques 1 à 5 décrits ci-dessus peuvent être remplacés par tout dispositif équivalent (potences mobiles, bras articulés...) sans sortir du cadre de l'invention.

On notera aussi qu'il faut éviter que, lors du processus de formage, les tubes d'une nappe viennent au contact les uns des autres, car ce contact contrarierait la déformation qui ne serait pas celle désirée. Si le déplacement d'un guide entre sa position d'origine et sa position finale est parallèle au plan contenant les axes des orifices de ce guide il faut donc limiter le déplacement du guide dans cette direction. Ainsi, dans le cas de la figure 2 où le plan 21 des guides est parallèle à la direction Z, il est nécessaire de limiter les déplacements dans cette direction. Si on souhaite, pour des besoins de programmation que les mouvements soient des mouvements simples, sans limitation en Z ou en Y on prévoira un plan 21 pour chaque guide qui ne soit pas parallèle aux directions Z et Y en réalisant des guides dont les orifices 18, 19 ont des axes disposés dans un plan oblique.

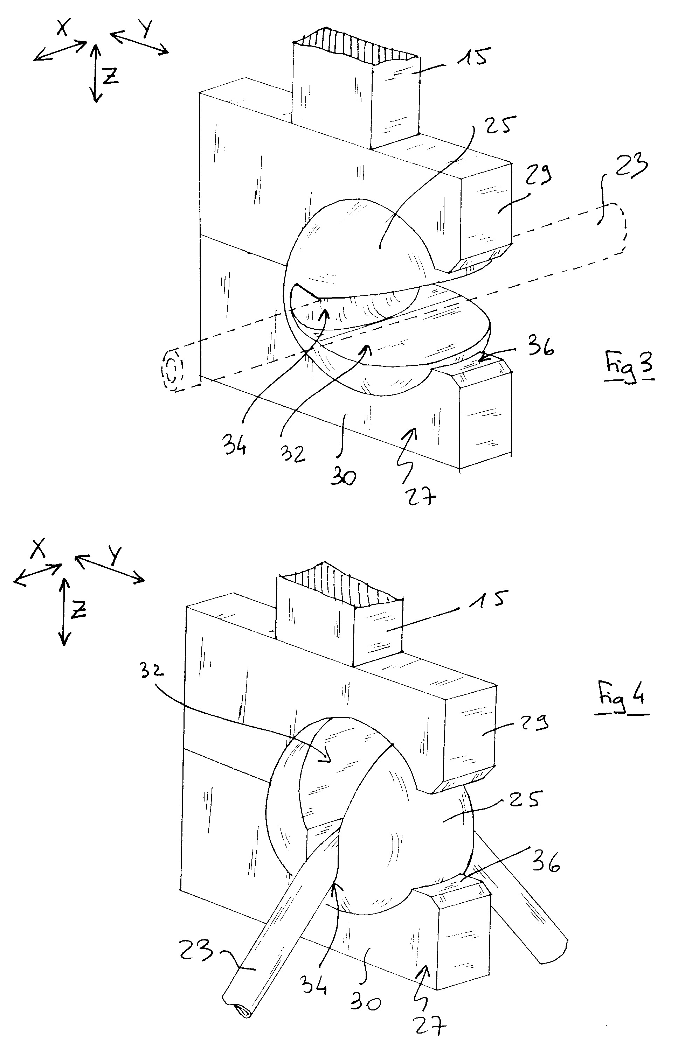

Les figures 3 et 4 présentent une variante de réalisation dans laquelle chaque guide 16, 17 comporte une sphère 25 disposée dans un réceptacle 27 du guide formé de deux mâchoires 29, 30. Les mâchoires présentent des évidements en portion de sphère de même rayon que le rayon de la sphère 25 dans lesquels est logée la sphère 25, si bien que la sphère 25 est mobile en rotation autour de son centre par rapport au réceptacle 27 et peut être orientée dans toutes les directions sans quitter le réceptacle.

En guise de logement pour le tube 23, la sphère 25 présente une entaille 32 dont la largeur est légèrement supérieure au diamètre du tube et s'étendant suivant l'équateur de la sphère en traversant plus de la moitié de la sphère. La surface 34 du fond de cette entaille 32 est sensiblement torique dont le diamètre des méridiens est sensiblement égal à celui du tube à former et dont le rayon du plus petit parallèle est celui du coude à réaliser.

Un dispositif non représenté permet d'éloigner l'une de l'autre les deux mâchoires 29, 30 afin de libérer la sphère 25. Lorsque les mâchoires 29, 30 sont assemblées, elles définissent un support pour la sphère en forme de C dont l'ouverture 36 permet l'introduction latérale du tube 23. Le tube 23 est représenté en traits pointillés sur la figure 3 et en traits pleins sur la figure 4.

La position d'origine des supports correspond ici à une position dans laquelle les centres des sphères sont alignées.

Les guides de ce type sont utilisés de la façon suivante. Le tube rectiligne 23 à thermoformer est introduit latéralement à travers l'ouverture 36 dans l'entaille 32 de chacune des sphères pour le mettre en appui contre le fond 34 de l'entaille comme sur la figure 3. De même qu'avec le guide de la figure 2, on fait ensuite circuler un fluide chaud à l'intérieur du tube, puis on déplace chacun des guides 16, 17 parallèlement à lui-même dans le repère X, Y, Z d'une valeur connue, et ce dans un ordre déterminé. Lors du déplacement du guide les sphères tournent dans leur support comme représenté sur la figure 4, limitant ainsi les frottements entre tube et guides donc les efforts à fournir aux guides pour les déplacer tout en diminuant les risques de blessure du tube chaud par le guide lors de leur glissement relatif. On refroidit ensuite le tube ainsi maintenu déformé. Puis, on écarte l'une de l'autre les deux mâchoires de chaque guide afin d'extraire de chaque sphère le tube 23 mis en géométrie.

On pourra réaliser des guides de ce type comprenant chacun plusieurs ensembles sphère-mâchoires disposés par exemple les uns au-dessus des autres afin de réaliser le thermoformage simultané de plusieurs tubes comme dans le mode de réalisation des figures 1 et 2. La position d'origine du support correspond alors à une position dans laquelle les centres des sphères relatives à un même tube sont alignées.

## Revendications

1. Procédé pour placer dans une géométrie particulière par thermoformage au moins un tronçon (23) de tube, caractérisé en ce qu'on place au moins un tronçon de tube sensiblement rectiligne dans une pluralité de guides (16,17), comportant chacun au moins un logement (18, 19 ; 32) pour accueillir le tronçon de tube, les logements étant préalablement placés en alignement, la position de chaque guide étant connue dans un repère (X, Y, Z) déterminé, en ce qu'on fait circuler un fluide chaud à l'intérieur du tube (23), en ce qu'on déplace chacun des guides (16, 17) parallèlement à lui-même dans le repère (X, Y, Z) d'une valeur connue, en ce qu'on refroidit le tube ainsi maintenu déformé et en ce qu'on dégage le tube (23) mis en géométrie des guides (16, 17).

2. Procédé selon la revendication 1, caractérisé en ce que les guides sont déplacés dans un ordre déterminé.

3. Dispositif pour mettre en oeuvre le procédé selon la revendication 1 ou la revendication 2, caractérisé en ce qu'il comporte une pluralité de supports (14, 15) motorisés, déplaçables selon les trois directions (X, Y, Z) d'un repère spatial à partir d'une position d'origine, chaque support (14, 15) étant équipé d'un guide (16, 17) comportant une pluralité d'orifices (18, 19) en forme de diabolo, dont les axes sont parallèles et coplanaires, le plan (21) des axes formant le plan de joint de deux parties du guide séparables l'une de l'autre, la position d'origine étant définie par un plan contenant l'ensemble des axes des orifices (18, 19) dans lequel les orifices relatifs à un même tube (23) sont alignés, un dispositif (1, 8, 10, 12) de commande programmable du déplacement séquentiel de chacun des supports (14, 15) et un organe de commande de l'ouverture et de la fermeture de chacun des guides (16, 17).

4. Dispositif pour mettre en oeuvre le procédé selon la revendication 1 ou la revendication 2, caractérisé en ce qu'il comporte une pluralité de supports motorisés (14, 15), déplaçables selon les trois directions (X, Y, Z) d'un repère spatial à partir d'une position d'origine, chaque support (14, 15) étant équipé d'un guide (16, 17) comportant au moins une sphère (25) disposée dans un réceptacle (27) du guide en étant mobile en rotation autour de son centre par rapport au réceptacle, la sphère présentant une entaille (32) s'étendant suivant l'un de ses équateurs, et dont le fond (34) est sensiblement torique, la position d'origine correspondant à une position des supports dans laquelle les centres des sphères relatives à un même tube (23) sont alignées, le dispositif comportant en outre un dispositif (1, 8, 10, 12) de commande programmable du déplacement séquentiel de chacun des supports (14, 15).
